(19) **Europäisches Patentamt**

**European Patent Office**

**Office européen des brevets**

(11) **EP 1 621 855 A1**

(12) **EUROPÄISCHE PATENTANMELDUNG**

(43) Veröffentlichungstag:
**01.02.2006 Patentblatt 2006/05**

(51) Int Cl.:
***G01F 1/24*** *(2006.01)*

(21) Anmeldenummer: **05015709.8**

(22) Anmeldetag: **20.07.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **27.07.2004 DE 102004036428**

(71) Anmelder: **ABB PATENT GmbH**
**68526 Ladenburg (DE)**

(72) Erfinder:
• **Keese, Dieter**
**37194 Wahlsburg (DE)**
• **Furkert, Wilfried**
**37081 Göttingen (DE)**

(74) Vertreter: **Schmidt, Karl Michael**
**ABB Patent GmbH**
**Oberhausener Strasse 33**
**40472 Ratingen (DE)**

(54) **Induktiver Schwebekörper - Durchflussmesser**

(57) Schwebekörper-Durchflussmesser für strömende Medien, mit einem vertikal angeordneten Messrohr (1), in welchem ein zugeordneter Schwebekörper (2) entlang der Strömungsrichtung bewegbar untergebracht ist, der zumindest teilweise aus einem ferritischen Material besteht, und der mit außerhalb des Messrohres (1) angeordneten Mitteln zur magnetischen Erfassung der Stellung des Schwebekörpers (2) zusammenwirkt, wobei die Mittel zur magnetischen Erfassung der Stellung des Schwebekörpers (2) eine zumindest teilweise im axialen Bewegungsbereich des Schwebekörpers (2) koaxial zum Messrohr (1) angeordnete elektrische Spule (4) umfassen, deren sich durch die relative Lage des Schwebekörpers (2) ändernde Induktivität eine nachgeschaltete Auswerteelektronik (5) in ein zum Durchfluss proportionales elektrisches Signal umwandelt.

**Fig.1**

EP 1 621 855 A1

**Beschreibung**

Die vorliegende Erfindung betrifft einen Schwebekörper-Durchflussmesser für strömende Medien, mit einem vertikal angeordneten Messrohr, in welchem ein zugeordneter Schwebekörper entlang der Strömungsrichtung bewegbar untergebracht ist, der zumindest teilweise aus einem ferritischen Material besteht, und der mit außerhalb des Messrohres angeordneten Mitteln zur magnetischen Erfassung der Stellung des Schwebekörpers zusammenwirkt.

Derartige Schwebekörper-Durchflussmesser kommen vornehmlich in der chemischen und verfahrenstechnischen Industrie zum Einsatz und werden hier zur Erfassung von Volumen- und Massendurchflüssen in geschlossenen Rohrleitungssystemen eingesetzt. Wegen des einfachen und präzisen Wirkprinzips haben Schwebekörper-Durchflussmesser selbst vor dem Hintergrund der neueren elektrischen und elektronischen Durchflussmesseinrichtungen kaum an Bedeutung eingebüßt.

Gemäß des allgemeinen Standes der Technik besteht ein Schwebekörper-Durchflussmesser im einfachsten Fall aus einem konischen Messrohr und einem hierin untergebrachten Schwebekörper. Das Messrohr ist ein sich nach oben erweiterndes und von unten nach oben von dem zu messenden Flüssigkeits- oder Gasstrom durchflossenes konisches Rohr, in dem sich der Schwebekörper in Vertikalrichtung frei bewegen kann. Zusammen mit dem konischen Messrohr bildet der Messkörper eine Drosselstelle. Die Dichte des Schwebekörpers ist regelmäßig größer als die Dichte des Flüssigkeits- oder Gasstroms. In Abhängigkeit vom Durchfluss nimmt der Schwebekörper im eingeschwungenen Zustand eine bestimmte Höhenstellung im Messrohr ein, die sich durch das Gleichgewicht der durch die Strömung hervorgerufenen, auf den Schwebekörper übertragenen hydrodynamischen Kraft und der Differenz der Gewichts- und Auftriebskräfte des Schwebeköpers ergibt. Die Höhenstellung des Schwebekörpers ist ein Maß für den Durchfluss und kann entweder direkt von einem Betrachter über eine Skala an einem insoweit durchsichtigen - meist gläsernen - Messrohr abgelesen oder durch Mittel zur magnetischen Erfassung der Stellung des Schwebekörpers auf eine externe Skala oder einen elektrischen Messaufnehmer übertagen werden. Die vorliegende Erfindung bezieht sich auf den letztgenannten Schwebekörper-Durchflussmesser mit Mitteln zur magnetischen Erfassung der Stellung des Schwebekörpers zwecks Anzeige oder Weiterverarbeitung des Durchflusssignals außerhalb des Messrohres.

Aus der DE 196 39 060 A1 geht ein gattungsgemäßer Schwebekörper-Durchflussmesser für strömende Medien hervor. Der Schwebekörper-Durchflussmesser besteht aus einem vertikal angeordneten Messrohr, welches in eine das strömende Medium führende Rohrleitung eingeflanscht ist. Der längs der Strömungsrichtung freibewegbare, innenliegende Schwebekörper weist einen integrierten Permanentmagneten auf. Dieser wirkt zusammen mit einem außerhalb des Messrohres angeordneten, drehbar gelagerten Folgemagneten, welcher den Bewegungen des mit dem Schwebekörper verbundenen Permanentmagneten durch eine magnetische Kopplung folgt. An der Schwenkachse des ringförmigen Folgemagneten ist ein Zeiger radial angeordnet, welcher den Durchflusswert auf einer korrespondierenden Skala mit gleicher Spreizung anzeigt. Mit dieser technischen Lösung können unabhängig von der Nennweite des Messrohres und ohne besondere Hilfsmittel gut ablesbare Skalen gleicher Spreizung verwendet werden, da der Folgemagnet hier lateral magnetisiert ist und auf seinem dem Messrohr näheren Kopplungsteil der Nordpol und der Südpol einen Winkel von ca. 90° einschließen.

Ein Nachteil dieser technischen Lösung besteht jedoch darin, dass ein Ablesen des Durchflusswertes nur direkt am Messrohr möglich ist. Bei vielen praktischen Anwendungsfällen ist aufgrund prozesstechnischer Bedingungen eine Durchflussermittlung ortsfern der Messstelle gewünscht.

Es ist bereits versucht worden, die Drehbewegung der mit der Achse des Folgemagneten übereinstimmenden Zeigerachse mit Hilfe eines Drehkondensators, Potentiometers oder Hall-Sensors in ein dem Durchfluss proportionales elektrisches Signal umzuwandeln, welches dann über eine elektrische Leitung zu der ortsfern angeordneten zentralen elektronischen Steuereinrichtung übertragbar ist, um den Durchfluss gemeinsam mit anderen prozessbestimmenden Parametern zur Steuerung der Gesamtanlage auswerten zu können.

Nachteilig bei dieser technischen Lösung zur Umwandlung des von dem Schwebekörper-Durchflussmesser gemessenen Durchfluss in ein elektrisches Ausgangssignal ist, dass hiermit ein recht beträchtlicher Bauteileaufwand verbunden ist. Bei bestimmten Messstoff- und / oder Umgebungsbedingungen, können derartige herkömmliche Systeme mit elektrischem Signalausgang aufgrund der weiterhin erforderlichen Mechanik zur Übertragung der Drehbewegung auf die Schwenkachse nicht eingesetzt werden. Ferner ist bei Anlagen mit einer zentralen elektronischen Steuereinrichtung eine unmittelbare Ablesbarkeit des Durchflusswertes am Messrohr überhaupt nicht erforderlich.

Es ist daher die Aufgabe der vorliegenden Erfindung, einen Schwebekörper-Durchflussmesser der vorstehend beschriebenen Art dahingehend weiter zu verbessern, dass mit einfachen technischen Mitteln eine trotz ungünstigen Umweltbedingungen präzise Ermittlung des Durchflusses möglich ist.

Die Aufgabe wird ausgehend von einem Schwebekörper-Durchflussmesser gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die Mittel zur magnetischen Erfassung der Stellung des Schwebekörpers eine zumindest teilweise im axialen Bewegungsbereich des Schwebekörpers koaxial zum Messrohr angeordnete elektrische Spule umfassen, deren sich durch die relative Lage des Schwebekörpers ändernde Induktivität eine nachgeschaltete Auswerteelektronik in ein zum Durchfluss proportionales elektrisches Signal umwandelt.

Der Vorteil der erfindungsgemäßen Lösung liegt insbesondere darin, dass hiermit unter Verzicht auf bewegliche mechanische Bauelemente ein den Durchfluss repräsentierbares elektrisches Ausgangssignal erzeugbar ist. Wegen der insoweit wegfallenden mechanischen Bauelemente ist der Aufwand zur Umsetzung der erfindungsgemäßen Lösung im Vergleich zum Stand der Technik denkbar gering. Die elektrische Spule ist durch die ohnehin vorhandene Isolation des Spulendrahts ausreichend vor störenden äußeren Umwelteinflüssen, wie Feuchtigkeit und dergleichen geschützt. Die erfindungsgemäße Lösung basiert somit auf der Grundidee, einen Schwebekörper-Durchflussmesser mit elektrischem Ausgangssignal so zu gestalten, dass keine bewegten, mechanischen Bauteile benötigt werden.

Die erfindungsgemäß vorgesehene elektrische Spule kann im einfachsten Fall durch direkte Umwicklung des Messrohres mit dem Spulendraht gebildet werden. Der Spulendraht kann nach Herstellung der Umwicklung am Messrohr - beispielsweise durch eine Klebeverbindung - fixiert werden. Diese Maßnahme lässt sich fertigungstechnisch besonders einfach umsetzen und ist auch dafür geeignet, herkömmliche Messrohre mit einem aus ferritischem Material bestehenden Schwebekörper nach Entfernung der mechanischen, magnetischen Kopplungsteile umzurüsten.

Alternativ zu der direkten Umwicklung des Messrohres kann der Spulendraht jedoch auch auf einem separaten hohlzylindrischen Spulenkörper aufgewickelt sein, mit welchem die elektrische Spule dann auf das Messrohr aufgeschoben wird. Diese alternative Lösung bietet den Vorteil, eine defekte elektrische Spule gegen ein Ersatzteil auszutauschen, ohne dass das gesamte Messrohr ersetzt werden muss. Bei dieser Ausführungsform ist der Spulenköper lösbar am Messrohr, beispielsweise durch eine Klemmverbindung, anzubringen.

Gemäß einer weiteren Ausführungsform kann die elektrische Spule auch direkt innerhalb der Wandung des Messrohres integriert werden. In besonders einfacher Weise lässt sich dieses dadurch umsetzen, dass das Messrohr aus Kunststoff hergestellt wird und die elektrische Spule beim Spritzgießen des Messrohres von dem Kunststoff umschlossen wird. Ein Vorteil dieser Lösung besteht darin, dass hiermit eine vollständige Abkapselung der elektrischen Spule vor störenden oder zerstörenden äußeren Umwelteinflüssen realisierbar ist.

Für die erfindungsgemäße Messwerterfassung ist es erforderlich, dass der innerhalb des Messrohres untergebrachte Schwebekörper zumindest teilweise aus einem ferritischen Material besteht. Vorzugsweise kann das ferritische Material in den Schwebekörper eingeschlossen sein und beispielsweise den Kern des Schwebekörpers bilden, der ansonsten aus Kunststoff besteht. Alternativ hierzu ist es jedoch auch möglich, den Schwebekörper vollständig aus dem ferritischen Material herzustellen, was eine fertigungstechnische Vereinfachung bei der Herstellung des Schwebekörpers mit sich bringt.

Vorzugsweise eignen sich als ferritische Materialien für den Schwebekörper die Elemente Kobalt, Nikkel, Eisen oder Legierungen hiervon. Mit diesen Materialien lässt sich ein ausreichend starkes Magnetfeld um den Schwebeköroper herum erzeugen. Die vorstehend erwähnten ferritischen Materialien verfügen über eine hier ausreichende Permeabilität $\mu$.

Natürlich ist es auch möglich, neben der erfindungsgemäßen Lösung zur direkten Erzeugung eines elektrischen Signals, das den Durchfluss repräsentiert, auch die herkömmlichen mechanischen Mittel zur Anzeige des Durchflusses zu verwenden. Der Schwebekörper kann also durchaus zusätzlich mit direkt am Messrohr angeordneten mechanischen Mittel zur Anzeige des Durchflusses zusammenwirken, da die für die erfindungsgemäße Lösung erforderliche elektrische Spule deren Platzierung am Messrohr nicht behindern würde. Die zusätzlichen herkömmlichen mechanischen Mittel zur Anzeige des Durchflusses können dann zum Einsatz kommen, wenn neben der steuerungstechnisch zentralen Auswertung des Durchflusses auch ein lokales Ablesen des Durchflusses gewünscht ist.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:

Fig.1　　einen Schwebekörper-Durchflussmesser für strömende Medien, bei welchem die Lage des Schwebekörpers bei geringem Durchfluss dargestellt ist, und

Fig.2　　den Schwebekörper-Durchflussmesser nach Fig.1, bei welchem der Schwebekörper bei erhöhtem Durchfluss dargestellt ist.

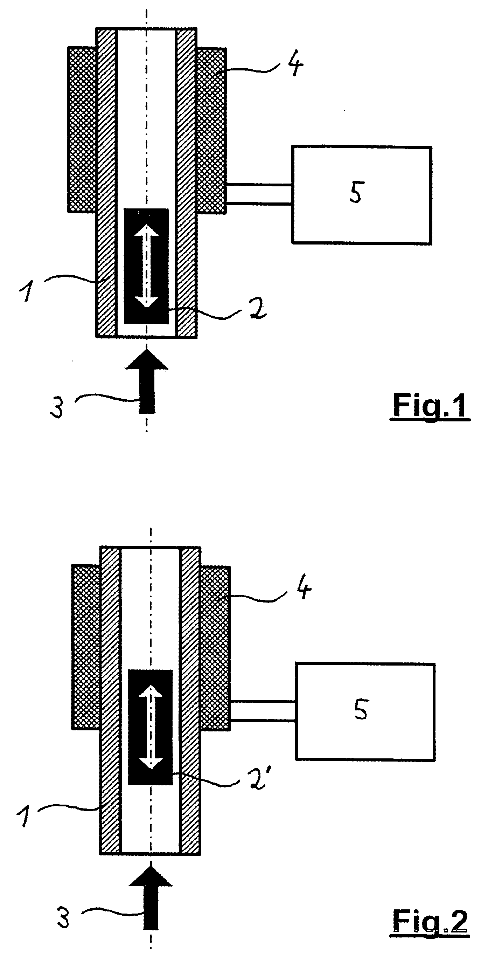

Gemäß Fig.1 besteht der Schwebekörper-Durchflussmesser für strömende Medien aus einem vertikal angeordneten Messrohr 1, welches hier aus Kunststoff besteht und in einer - nicht weiter dargestellten - Rohrleitung für ein strömendes Medium eingeflanscht ist. Innerhalb des Messrohres 1 befindet sich ein Schwebekörper 2, der in diesem Ausführungsbeispiel vollständig aus einem ferritschen Material besteht. Der Schwebekörper 2 ist längs des Messrohres 1 bewegbar.

Ausgehend vom Ruhezustand steigt der Schwebekörper 2 entsprechend des Durchflusses des strömenden Mediums, dessen Strömungsrichtung durch den Strömungspfeil 3 dargestellt ist. Die Höhenstellung des Schwebekörpers 2 ist proportional dem Durchfluss.

Zur Ermittlung des Durchflusses ist das Messrohr 1 mit einer elektrischen Spule 4 versehen. In diesem Ausführungsbeispiel ist die elektrische Spule durch eine direkte Umwicklung des Messrohres 1 mit dem Spulendraht gebildet. Der elektrische Anschluss der elektrischen Spule 4 steht mit einer Auswerteelektronik 5 in Verbindung.

In Abhängigkeit von der Höhenstellung des Schwebekörpers 2 im Messrohr 1, die proportional zum Durchfluss ist, ändert sich gegenüber dem Ruhezustand die Induktivität der elektrischen Spule. Diese Änderung der Induktivität wird durch die nachgeschaltet Auswerteelektronik 5 erfasst und in ein dem Durchfluss proportionales, elektrisches Signal umgewandelt.

Physikalisch beruht dieser Effekt auf der Tatsache, dass sich die Stärke eines Magnetfeldes mit ferromagnetischen Materialien verstärken lässt. Die wirkliche Stärke des Magnetfeldes wird nicht mehr durch die Feldstärke H, sondern durch die magnetische Flussdichte oder Induktion B gekennzeichnet. Der Zusammenhang zwischen der Induktion B und der Feldstärke H ist somit nicht nur über den Materialfaktor der Permeabilität $\mu$, sondern auch über eine magnetische Feldkonstante $\mu_0$ gegeben. Es gilt:

$$B = \mu_0 \times \mu \times H$$

In der dargestellten unteren Position des Schwebekörpers 2 besitzt die elektrische Spule 4 also nur eine geringe Induktivität, was folgerichtig einem geringen Durchfluss entspricht.

Gemäß Fig.2 befindet sich der Schwebekörper 2' demgegenüber in einer höheren Höhenstellung. Der Schwebekörper 2' ist hier fast vollständig in den Innenraum der elektrischen Spule 4 eingetaucht. Hierdurch wird die Induktivität der elektrischen Spule 4 erhöht, was dem erhöhten Durchfluss durch das Messrohr 1 entspricht.

Die erfindungsgemäße Lösung unterscheidet sich von dem eingangs beschriebenen bekannten Schwebekörper-Durchflussmesser des Standes der Technik dadurch, dass keine beweglichen mechanischen Bauteile, wie Achsen- und Achslagerungen, benötigt werden.

Die Erfindung ist nicht beschränkt auf das vorstehend beschriebene bevorzugte Ausführungsbeispiel. Es sind vielmehr auch Abwandlungen hiervon denkbar, die unter den Schutzbereich der nachfolgenden Ansprüche fallen. So ist es beispielsweise auch möglich, dass die elektrische Spule direkt innerhalb der Wandung des Messrohres 1 integriert ist oder einen hohlzylindrischen Spulkörper umfasst, mit welchen die elektrische Spule auf das Messrohr aufschiebbar ist. Je nach Einsatzbedingungen kann von diesen alternativen Ausführungsformen Gebrauch gemacht werden.

**Bezugszeichenliste**

| 1 | Messrohr |
|---|---|
| 2 | Schwebekörper |
| 3 | Strömungspfeil |
| 4 | elektrische Spule |
| 5 | Auswerteelektronik |

**Patentansprüche**

1. Schwebekörper-Durchflussmesser für strömende Medien, mit einem vertikal angeordneten Messrohr (1), in welchem ein zugeordneter Schwebekörper (2) entlang der Strömungsrichtung bewegbar untergebracht ist, der zumindest teilweise aus einem ferritischen Material besteht, und der mit außerhalb des Messrohres (1) angeordneten Mitteln zur magnetischen Erfassung der Stellung des Schwebekörpers (2) zusammenwirkt,
   **dadurch gekennzeichnet, dass** die Mittel zur magnetischen Erfassung der Stellung des Schwebekörpers (2) eine zumindest teilweise im axialen Bewegungsbereich des Schwebekörpers (2) koaxial zum Messrohr (1) angeordnete elektrische Spule (4) umfassen, deren sich durch die relative Lage des Schwebekörpers (2) ändernde Induktivität eine nachgeschaltete Auswerteelektronik (5) in ein zum Durchfluss proportionales elektrisches Signal umwandelt.

2. Schwebekörper-Durchflussmesser nach Anspruch 1,
   **dadurch gekennzeichnet, dass** die elektrische Spule (4) durch direkte Umwicklung des Messrohres (1) mit dem Spulendraht gebildet ist.

3. Schwebekörper-Durchflussmesser nach Anspruch 1,
   **dadurch gekennzeichnet, dass** die elektrische Spule (4) einen vom Spulendraht umwundenen hohlzylindrischen Spulenkörper umfasst, mit welchen die elektrische Spule (4) auf das Messrohr (1) aufschiebbar ist.

4. Schwebekörper-Durchflussmesser nach Anspruch 1,
   **dadurch gekennzeichnet, dass** die elektrische Spule (4) aus einem innerhalb der Wandung des Messrohres (1) integrierten Spulendraht besteht.

5. Schwebekörper-Durchflussmesser nach Anspruch 1,
   **dadurch gekennzeichnet, dass** das ferritische Material in den Schwebekörper (2) eingeschlossen ist.

6. Schwebekörper-Durchflussmesser nach Anspruch 1,
   **dadurch gekennzeichnet, dass** der Schwebekörper (2) vollständig aus dem ferritischen Material besteht (Fig. 1).

7. Schwebekörper-Durchflussmesser nach Anspruch 5 oder 6,
   **dadurch gekennzeichnet, dass** das ferritische Material ausgewählt ist aus einer Gruppe, umfassend die Elemente: Kobalt, Nickel, Eisen oder Legierungen hiervon.

8. Schwebekörper-Durchflussmesser nach einem der vorstehenden Ansprüche,
   **dadurch gekennzeichnet, dass** der Schwebekörper (2) zusätzlich mit direkt am Messrohr (1) angeordneten mechanischen Mitteln zur Anzeige des Durchflusses zusammenwirkt.

**Fig.1**

**Fig.2**

**EP 1 621 855 A1**

<table>
<tr><td colspan="4" align="center">Europäisches Patentamt   **EUROPÄISCHER RECHERCHENBERICHT**   Nummer der Anmeldung<br>EP 05 01 5709</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 103 25 786 A1 (SMC K.K., TOKIO/TOKYO) 8. Januar 2004 (2004-01-08) * Seite 2, Absatz 10 - Seite 3, Absatz 15 * * Seite 8, Absatz 91 - Absatz 101; Abbildung 11 * ----- | 1-8 | G01F1/24 |
| X | DE 29 19 359 A1 (ORSZAGOS KOEOLAJ ES GAZIPARI TROESZT GAZTECHNIKAI KUTATO ES VIZSGALO A) 27. November 1980 (1980-11-27) * Seite 10, Absatz 2 - Seite 12, Absatz 2; Abbildung 2 * ----- | 1-8 | |
| X | CH 341 745 A (VEREINIGTE GLANZSTOFF-FABRIKEN AG) 15. Oktober 1959 (1959-10-15) * Seite 2, Zeile 68 - Zeile 84; Abbildung 1 * ----- | 1-8 | |
| X | DE 32 21 505 A1 (VOLKRODT,WOLFGANG,DR.-ING) 8. Dezember 1983 (1983-12-08) * Seite 3 - Seite 4; Abbildung 1 * ----- | 1-8 | RECHERCHIERTE SACHGEBIETE (Int.Cl.7) G01F |
| X | DE 823 797 C (FARBWERKE HOECHST, VORMALS MEISTER LUCIUS & BRUENING) 6. Dezember 1951 (1951-12-06) * Seite 2, Zeile 37 - Zeile 56; Abbildung 2 * ----- | 1-8 | |

Der vorliegende Recherchenbericht wurde für alle Patentansprüche erstellt

| Recherchenort | Abschlußdatum der Recherche | Prüfer |
|---|---|---|
| Den Haag | 25. Oktober 2005 | Boerrigter, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument

EPO FORM 1503 03.82 (P04C03)

7

**ANHANG ZUM EUROPÄISCHEN RECHERCHENBERICHT**
**ÜBER DIE EUROPÄISCHE PATENTANMELDUNG NR.**                    EP 05 01 5709

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-10-2005

| Im Recherchenbericht angeführtes Patentdokument | | Datum der Veröffentlichung | Mitglied(er) der Patentfamilie | | Datum der Veröffentlichung |
|---|---|---|---|---|---|
| DE 10325786 | A1 | 08-01-2004 | CN | 1467483 A | 14-01-2004 |
| | | | JP | 2004012308 A | 15-01-2004 |
| | | | TW | 591212 B | 11-06-2004 |
| | | | US | 2003226407 A1 | 11-12-2003 |
| DE 2919359 | A1 | 27-11-1980 | KEINE | | |
| CH 341745 | A | 15-10-1959 | KEINE | | |
| DE 3221505 | A1 | 08-12-1983 | KEINE | | |
| DE 823797 | C | | KEINE | | |

EPO FORM P0461

Für nähere Einzelheiten zu diesem Anhang : siehe Amtsblatt des Europäischen Patentamts, Nr.12/82